# EUROPÄISCHE PATENTSCHRIFT

(11) **EP 1 356 891 B1**
(45) Veröffentlichungstag und Bekanntmachung des Hinweises auf die Patenterteilung: **06.07.2005**
(21) Anmeldenummer: 03007402.5
(22) Anmeldetag: 02.04.2003
(51) Int. Cl.: B23P 15/14, B21H 5/02, F16D 23/04, B21D 53/28

(54) **Verfahren zur Herstellung von Schiebemuffen für Schaltgetriebe**
Method of manufacturing sliding sleeves for gear boxes
Procédé de fabrication de manchons coulissants pour boîtes de vitesses

(30) Priorität: 22.04.2002 DE 10217848
(43) Veröffentlichungstag der Anmeldung: 29.10.2003
(73) Patentinhaber: HAY-TEC Automotive GmbH & Co. KG, 55566 Bad Sobernheim (DE)
(72) Erfinder: Hauf, Gerald, Dr., 55218 Ingelheim (DE)
(74) Vertreter: Grünecker, Kinkeldey, Stockmair & Schwanhäusser Anwaltssozietät

(56) Entgegenhaltungen:
- EP-A- 0 955 481
- EP-A- 1 150 028
- DE-A- 10 018 093
- DE-A- 19 636 567
- US-A- 5 096 037
- US-A- 5 392 517

## Beschreibung

Die vorliegende Erfindung betrifft ein Verfahren zur Herstellung eines Schiebemuffen für Schaltgetriebe.

Schiebemuffen sind Teile in manuellen Schaltgetneben; sie werden im Einlege eines Ganges durch die Schaltknuppelbewegung axial auf der Getriebewelle verschoben und schließen dadurch den Kraftfluss für den einzulegenden Gang. Schiebemuffen haben grundsatzlich eine gerade Innenverzahnung, die zusätzlich mit Schrägen modifiziert wird um ein einfaches Einkuppeln zu ermoglichen ("Abdachung") und um zu verhindern, dass ein eingelegter Gang rausspringt ("Hinterlegung").

Schiebemuffen werden konventionell regelmäßig aus einem mittels Umformen, vorzugsweise Schmieden erzeugten Rohling hergestellt, welcher vollstandig uberdreht wird Auf der inneren Umfangsfläche wird dann eine Verzahnung geräumt oder gestoßen Danach wird das Zwischenprodukt erneut spanhebend bearbeitet, beispielsweise werden Details an der äußeren Umfangsflache bzw den stirnseitigen Endseiten des rotationssymmetrischen Bauteils ausgebildet. Die Verzahnung wird zumeist spanhebend oder umformend mit Schrägen - Abdachung und Hinterlegung - versehen zum Sicherstellen der oben genannten Funktionalität. Das Bauteil wird schließlich entgratet und endlich typischer Weise einsatzgehartet.

Weiterhin ist es bekannt, zur Herstellung von Schiebemuffen zunächst einen ringformigen Rohling durch Ringwalzen, insbesondere durch Kaltwalzen, im Durchmesser zu vergrößern und durch Walzen an der äußeren Umfangsflache des Bauteils eine sich zu der äußeren Umfangsflache öffnenden Nut, den sogenannten Schaltgabeleinstich auszubilden. Dieser Prozess des radialen Ringwalzens ist eine Alternative zur zuvor genannten Drehbearbeitung Danach wird in bekannter Weise mittels Räumen eine Verzahnung an der inneren Umfangsfläche ausgebildet. Die vorerwähnten nachgeordneten Schritte können folgen Die Innenverzahnung kann in diesem Fall induktionsgehärtet werden, da eine Härtung der äußeren Umfangsflache bereits durch die Kaltverformung beim Walzen erfolgt ist. Entsprechend sind auch die durch die Konturierung der äußeren Umfangsfläche ausgebildeten Funktionsflächen gehärtet.

Die vorstehend beschriebenen Herstellungsverfahren, die aus der EP-A-1 150 028, die den nachstliegenden Stand der Technik beschreibt, bekannt sind, sind relativ aufwendig, was nicht zuletzt deshalb nachteilig ist, weil die vorstehend beschriebenen Schiebemuffen als Massenartikel für Fahrzeuggetriebe oder dergleichen hergestellt werden.

Der vorliegenden Erfindung liegt die Aufgabe zugrunde, ein wirtschaftliches Verfahren zur Herstellung von Schiebemuffen für Schaltgetriebe anzugeben.

Zur Losung der obigen Aufgabe wird mit der vorliegenden Erfindung ein Verfahren zur Herstellung von Schiebemuffen vorgeschlagen,
- bei dem ein Vorformling über einen Werkzeugdorn mit Außenverzahnung aufgeschoben wird,
- der Vorformling dann mittels Drückwalzen durch wenigstens eine sich axial an der Umfangsflache des Vorformlings entlang bewegende Rolle zur Abbildung der Außenverzahnung des Werkzeugdorns an der Innenumfangsfläche des Vorformlings umgeformt wird,
- der umgeformte Vorformling danach durch Profilwalzen mittels einer oder mehrerer profilierter Walzen an seiner äußeren Umfangsfläche zu einem an seiner äußeren Umfangsfläche profilierten Umformteil umgeformt wird
- und schließlich der Werkzeugdorn aus dem Umformteil entnommen wird

Im Gegensatz zu den vorbekannten Verfahren wird bei dem erfindungsgemäßen Verfahren zunächst die Innenverzahnung an dem Vorformling ausgebildet, und zwar durch einen Umformschritt, dem sogenannten Druckwalzen. Danach folgt ein weiterer Umformschritt, das Profilwalzen, zur Ausbildung der konturierten Außenfläche des Bauteils, wobei der beim Druckwalzen verwendete Werkzeugdorn während des Profilwalzens in dem umgeformten Vorformling verbleibt. Am Ende dieser beiden umformenden Verfahrensschntte sind sowohl die äußere Umfangsflache als auch die innere Umfangsflache des rotationssymmetrischen Bauteils zumindest endkonturnah hergestellt.

Mit dem erfindungsgemäßen Verfahren können Schiebemuffen hergestellt werden, ohne dass eine spanhebende Bearbeitung an der Innenumfangsfläche und der Außenumfangsflache erforderlich ist. Dies ermöglicht eine besonders wirtschaftliche Herstellung der besagten Bauteile.

Regelmäßig ergeben sich nach der profilgebenden Umformbearbeitung durch Drückwalzen an der äußeren Umfangsflache stirnseitig an dem Bauteil Einlauf- bzw. Auslaufzonen, die verworfen werden müssen Diese werden üblicherweise in einem nachfolgenden Bearbeitungsschritt abgestochen. Das innenverzahnte rotationssymmetrische Bauteil mit konturierter Außenfläche ist danach fertiggestellt Eventuelle Nachbearbeitungsschntte, beispielsweise das spanhebende Ausbilden von Details oder eventuelle Hartungsschntte können folgen.

Gemäß einer weiteren bevorzugten Ausgestaltung der vorliegenden Erfindung werden an der äußeren Umfangsfläche des umgeformten Vorformlings mehrere Profilabschnitte in axialer Richtung hintereinander ausgebildet und diese Profilabschnitte werden nach dem Entfernen des Werkzeugdornes in mehrere, jeweils einen der Profilabschnitte aufweisende Bauteile abgetrennt. Das Umformteil wird bei dieser bevorzugten Weiterbildung des efindungsgemaßen Verfahrens in mehrere ursprunglich einstuckig hintereinander angeordnete Ringstucke zerlegt Jedes einzelne der Ringstucke weist eine innere Verzahnung und eine Profilierung an seiner Außenumfangsfläche auf Es werden also bei den nachgeordneten Umformschntten mehrere zunächst zusammenhangende Bauteile hergestellt, die nachfolgend, vorzugsweise durch spanhebende Bearbeitung voneinander getrennt werden.

Zur Vereinfachung der Umformwerkzeuge zur Durchführung des Verfahrens und im Hinblick auf eine Massenherstellung identischer Bauteile wird gemäß einer weiteren bevorzugten Ausgestaltung der vorliegenden Erfindung vorgeschlagen, dass an der äußeren Umfangsflache des umgeformten Vorformlings identische Profilabschnitte ausgebildet werden.

Gemäß einer bevorzugten Weiterbildung der vorliegenden Erfindung wird nicht zuletzt im Hinblick auf eine Verkürzung der Bearbeitungszeit vorgeschlagen, die Profilabschnitte zeitgleich mittels Profilwalzen auszubilden.

Besonders bevorzugt werden die Profilabschnitte dabei durch wenigstens eine gegen die äußere Umfangsfläche des umgeformten Vorformlings wirkende Walze mittels Profilwalzen ausgeformt. Hierdurch kann die fur die an der äußeren Umfangsflache der Schiebemuffe notwendige Oberflächenharte eingestellt werden Ein separater Verfahrensschntt, bei dem jedenfalls die äußere Umfangsfläche des Bauteils gehartet wird, wird somit entbehrlich. Vorzugsweise wird hierzu der mittels Profilwalzen an der äußeren Umfangsfläche ausgebildete Schaltgabeleinstich mit einer anderen, als einer rechteckigen Querschnittsfläche ausgebildet. Zur einfacheren Ausbildung des Schaltgabeleinstichs mittels Profilwalzen weist dieser vorzugsweise eine konisch zulaufenden Querschnitt auf, welcher durch eine entsprechend ausgeformte und an der äußeren Umfangsflache des umgeformten Vorformlings angreifende Profilwalze ausgeformt werden kann.

Weitere Einzelheiten, Vorteile und Merkmale der vorliegenden Erfindung ergeben sich aus der nachfolgenden Beschreibung eines Ausführungsbeispiels in Verbindung mit der Zeichnung. In dieser zeigen:
- Figur 1: eine Längsschnittansicht eines Ausführungsbeispiels eines Vorformlings vor dem Druckwalzen,
- Figur 2: der in Figur 1 dargestellte Vorformling nach dem Druckwalzen;
- Figur 3: der in Figur 2 dargestellte Vorformling beim profilgebenden Umformen an der äußeren Umfangsfläche; und
- Figur 4: das in Figur 3 dargestellte Umformteil nach dem Abtrennen von sechs identisch ausgebildeten Bauteilen.

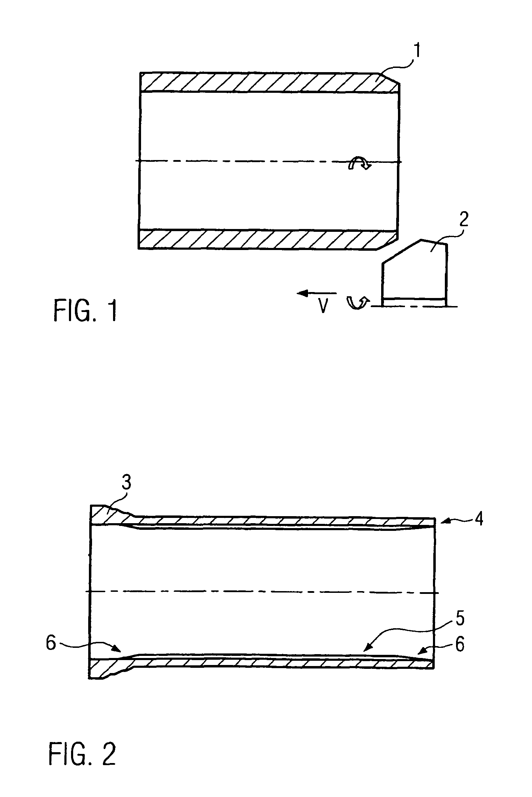

Bei dem nachfolgend beschriebenen Ausführungsbeispiel zur Durchführung des erfindungsgemäßen Verfahrens wird ein rohrformiges Halbzeug als ein Vorformling 1 verwendet (Fig. 1). In diesen Vorformling 1 wird ein nicht dargestellter, mit einer Außenverzahnung versehener Werkzeugdorn eingeschoben, wie dies naher in der DE-C2-196 36 567 beschrieben ist Der Vorformling wird in einer Haltevorrichtung zusammen mit dem Werkzeugdorn in axialer Richtung fixiert und drehbar gelagert eingespannt.

Der Vorformling 1 kann auch topfförmig mit einem an einer Stirnseite ausgebildeten, radial nach innen gerichteten Kragen ausgebildet sein, um eine axiale Fixierung des Vorformlings beim Druckwalzen zu erleichtern.

Wenigstens eine, vorzugsweise eine Vielzahl von in Bezug auf den Vorformling 1 umfanglich verteilt angeordneten Druckrollen 2 wird dann zur Einwirkung an die äußere Umfangsflache des Vorformlings 1 gebracht. Diese Druckrollen 2 sind mit geringerem Abstand zu der Mittellängsachse des Vorformlings 1 angeordnet, als die äußere Umfangsfläche desselben. Bei dem gezeigten Ausführungsbeispiel wird die Druckrolle 2 von der stirnseitig angefasten Seite auf den Vorformling 1, d h in Figur 1 von rechts zugestellt. Beim Zustellen der wenigstens einen Druckrolle wird vorzugsweise durch Rotation des Vorformlings 1 zusammen mit dem Werkzeugdorn eine rotierende Relativbewegung zwischen dem Vorformling 1 und der Druckrolle 2 erzeugt. Dabei wird die Druckrolle 2, deren Rotationsachse im wesentlichen parallel zu der Rotationsachse des Vorformlings 1 ausgerichtet ist, axial in Richtung des Pfeils V an der äußeren Umfangsflache des Vorformlings 1 vorbeigeführt. Hierdurch wird zum Einen in dem Vorformling 1 ein radialer Materialfluss erzeugt, der dazu fuhrt, dass die an dem Werkzeugdorn ausgebildete Außenverzahnung an der inneren Umfangsflache des Vorformlings 1 abgebildet wird. Zum Anderen wird radial überstehendes Material des Vorformlings 1 zwischen dem Werkzeugdorn und der Drückrolle 2 mit axialem Vorschub der Druckrolle 2 vor dieser hergeschoben.

Bei der Druckwalzenbearbeitung liegt zu jedem Zeitpunkt der Drehbewegung zwischen der Druckrolle 2 und dem Vorformling 1 jede Drückrolle jeweils nur an einem axialen Teilabschnitt des Zylinderwandbereichs des Vorformlings 1 an. Dementsprechend wird nur an diesem Teilabschnitt die an dem Werkzeugdorn ausgebildete Außenverzahnung an der inneren Umfangsflache des Vorformlings eingedruckt Bei dem in Figur 1 eingezeigten Ausführungsbeispiel wird der Achsabstand der Druckerrolle 2 konstant zu dem Achsabstand des Vorformlings 1 gehalten. Dementsprechend wird beim Druckwalzen an dem Vorformling eine ebene zylindrische Außenfläche erzeugt. Durch ein zum Vorformling radiales Zustellen der Druckwalzen kann jedoch euch in gewissen Grenzen eine Außenkontur mit geringen Durchmessersprüngen hergestellt werden. Das aufgrund des Schaltgabeleinstiches tiefgeschnittene Profil der Schiebemuffe lässt sich jedoch durch Drückwalzen alleine nicht herstellen.

Der Endbereich, an dem eine umformende Bearbeitung des Vorformlings 1 durch die Druckrolle 2 endet, weist eine umgeformte Auslaufschulter 3 auf (vgl. Figur 2).

Die Figur 2 zeigt den in Figur 1 gezeigten Vorformling 1 nach dem ersten Umformschntt Der dort gezeigte umgeformte Vorformling 4 weist eine Innenverzahnung 5 auf, die jeweils endseitige Auslaufbereiche 6 hat. Zwischen diesen endseitigen Auslaufbereichen 6 ist die Verzahnung 5 bei dem gezeigten Ausführungsbeispiel vollständig durch die Druckrollen abgebildet, d.h. entspricht der an dem Werkzeugdorn vorgesehenen Verzahnung.

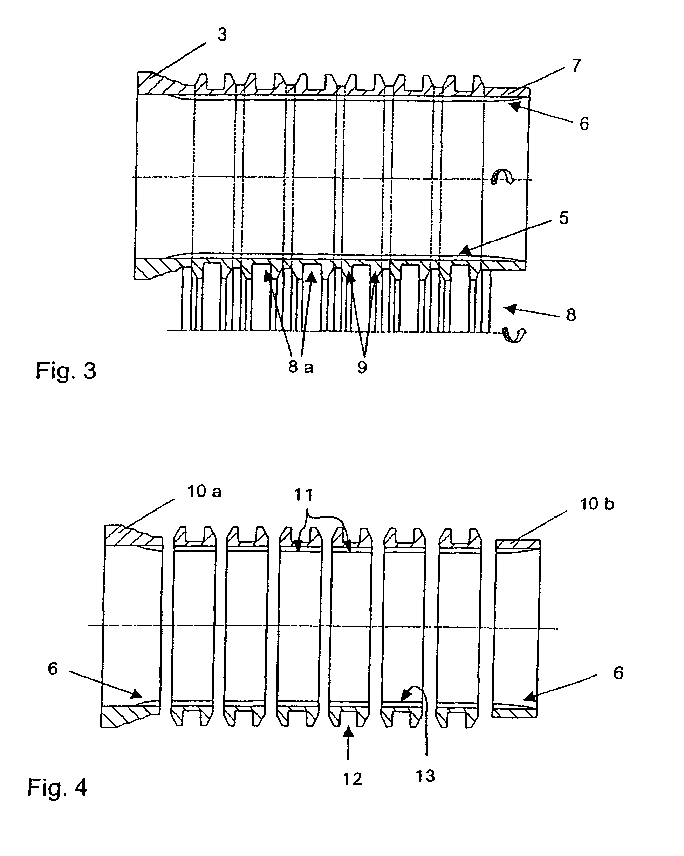

Die äußere Umfangsfläche des in Figur 2 gezeigten umgeformten Vorformlings 4 wird in einem nachfolgenden Verfahrensschritt durch Profilwalzen mit einem oder mehreren profilierten Werkzeugen an der äußeren Umfangsflache umgeformt, bis ein Umformteil 7 gemäß der Darstellung in Figur 3 erzeugt worden ist Dabei können eine oder mehrere Profilwalzen 8, die die gesamte oder nur einen Teil der Breite des Vorformlings uberdecken, am Umfang des Vorformlings jeweils um einen bestimmten Drehwinkel versetzt in Wirklage an dem Vorformling 4 sein. Diese Profilwalzen 8 weisen jeweils eine positive Kontur auf, welche der negativen Kontur an der Außenumfangsfläche des Vorformlings 4 über der Verzahnung 5 in Figur 3 entspricht.

Zwischen dem in Figur 2 gezeigten umgeformten Vorformling 4 und den Profilwalzen 8 wird eine rotierende Relativbewegung erzeugt. Während dieser Relativbewegung wird der axiale Abstand zwischen den Walzen 8 und der Rotationsachse des Vorformlings 4 und des Werkzeugdornes kontinuierlich verringert. Dementsprechend fließt das durch die sechs an der äußeren Umfangsflache der Walzen 8 ausgebildeten Scheibensegmente 8a verdrängte Material des Vorformlings 4 in die benachbarten, von der Profilwalze 8 und der äußeren Umfangsflache des Vorformlings 4 eingeschlossenen Hohlräume 9, bis bei zunehmender Verringerung des axialen Abstandes zwischen den Walzen 8 und dem Vorformling 7 die in Figur 3 gezeigte Konturierung an der äußeren Umfangsflache des Vorformlings ausgebildet ist. Am Ende dieses Umformschrittes, der typischer Weise unter Kaltwalzbedingungen erfolgt, ist das Umformteil 7 fertiggestellt.

Im Anschluss werden die Walzen 8 von der äußeren Umfangsflache des Umformteiles 7 entfernt. Die axiale Einspannung des Umformteiles 7 und des Werkzeugdornes wird gelöst. Der Werkzeugdorn wird aus dem Umformteil 7 herausgedrückt.

Anschließend (vgl. Figur 4) werden aus dem Umfangsteil 8 ringförmige Segmente spanhebend abgestochen Die beiden äußeren Segmente 10a, 10b werden verworfen. Diese umfassen die Auslaufbereiche 6 des Innengewindes und die Auslaufschulter 3. Die sechs ubngen dazwischenliegenden Segmente bilden jeweils identisch ausgeformte rotationssymmetrische Bauteile 11 mit einer konturierten Außenfläche. Vorliegend sind die rotationssymmetrischen Bauteile 11 als Schiebemuffen mit einem Schaltgabeleinstich 12 und einer geraden Innenverzahnung 13 ausgeformt.

### Bezugszeichenliste

- 1: Vorformling
- 2: Drückrolle
- 3: Auslaufschulter
- 4: umgeformter Vorformling
- 5: Verzahnung
- 6: Auslaufbereich
- 7: Umformteil
- 8: Profilwalze
- 8a: Scheibensegment
- 9: Hohlraum
- 10a: Endstück
- 10b: Endstück
- 11: Bauteil
- 12: Schaltgabeleinstich
- 13: Innenverzahnung

## Patentansprüche

1. Verfahren zur Herstellung von Schiebemuffen für Schaltgetriebe,
bei dem ein Vorformling (1) über einen Werkzeugdorn mit Außenverzahnung aufgeschoben wird, der Vorformling (1) dann mittels Drückwalzen durch wenigstens eine, axial an der Umfangsflache des Vorformlings (1) entlang bewegende Rolle (2) zur Abbildung der Außenverzahnung des Werkzeugdornes an der Innenumfangsfläche des Vorformlings (1) umgeformt wird, der umgeformte Vorformling (4) danach durch Profilwalzen mittels einer oder mehrerer profilierter Walzen (8) an seiner äußeren Umfangsflache zu einem an seiner äußeren Umfangsflache profilierten Umformteil (7) umgeformt wird und schließlich der Werkzeugdorn aus dem Umformteil (7) entnommen wird.

2. Verfahren nach Anspruch 1, **dadurch gekennzeichnet, dass** an der äußeren Umfangsflache des umgeformten Vorformlings (4) mehrere Profilabschnitte in axialer Richtung hintereinander ausgebildet werden und dass von dem Umformteil (7) nach dem Entfernen des Werkzeugdornes mehrere, jeweils einen der Profilabschnitte aufweisende Bauteile (11) abgetrennt werden.

3. Verfahren nach Anspruch 2, **dadurch gekennzeichnet, dass** an der äußeren Umfangsflache des Umformteiles (7) identische Profilabschnitte ausgebildet werden.

4. Verfahren nach Anspruch 2 oder 3, **dadurch gekennzeichnet, dass** die Profilabschnitte zeitgleich ausgebildet werden.

## Claims

1. A method of producing sliding sleeves for gearshift mechanisms,
wherein a preform (1) is pushed onto a tool mandrel provided with an external toothing, the preform (1) is then formed by means of roller spinning through at least one roll (2) moving axially along the circumferential surface of the preform (1) so as to form an image of the external toothing of the tool mandrel on the inner circumferential surface of the preform (1), the formed preform (4) is then formed by profile rolling by means of one or a plurality of profiled rolls (8) on its outer circumferential surface so as to obtain a formed part (7) having a profile on the outer circumferential surface thereof, and the tool mandrel is finally removed from said formed part (7).

2. A method according to claim 1, **characterized in that** a plurality of axially successive profile sections are formed on the outer circumferential surface of the formed preform (4), and that, after the removal of the tool mandrel, several components (11) are cut off from the formed part (7), each of said components (11) comprising one of the profile sections.

3. A method according to claim 2, **characterized in that** identical profile sections are formed on the outer circumferential surface of the formed part (7).

4. A method according to claim 2 or 3, **characterized in that** the profile sections are formed simultaneously.

## Revendications

1. Procédé de fabrication de manchons coulissants pour boîtes de vitesses,
selon lequel une ébauche (1) est enfilée sur un mandrin d'outil à denture extérieure, l'ébauche (1) est ensuite façonnée par fluotournage grâce à au moins un rouleau (2) qui se déplace axialement le long de la surface périphérique de l'ébauche (1), pour reproduire la denture extérieure du mandrin sur la surface périphérique intérieure de l'ébauche (1), l'ébauche façonnée (4) est ensuite façonnée par profilage à l'aide d'un ou plusieurs cylindres profilés (8), sur sa surface périphérique extérieure, pour former une pièce façonnée (7) sur cette surface, et enfin le mandrin d'outil est enlevé de la pièce façonnée (7).

2. Procédé selon la revendication 1, **caractérisé en ce que** plusieurs tronçons profilés sont formés les uns derrière les autres dans le sens axial sur la surface périphérique extérieure de l'ébauche façonnée (4) et **en ce que**, après avoir enlevé le mandrin, on sépare de la pièce façonnée (7) plusieurs éléments (11) qui présentent chacun le profil d'un tronçon.

3. Procédé selon la revendication 2, **caractérisé en ce que** des tronçons profilés identiques sont formés sur la surface périphérique extérieure de la pièce façonnée (7).

4. Procédé selon la revendication 2 ou 3, **caractérisé en ce que** les tronçons profilés sont formés simultanément.
